# EUROPEAN PATENT SPECIFICATION

(11) **EP 1 920 917 B1**
(45) Date of publication and mention of the grant of the patent: **13.07.2016**
(21) Application number: 06811028.7
(22) Date of filing: 02.10.2006
(51) Int. Cl.: C09J 125/18, C08K 5/057, C08K 5/098, C09K 3/10, B32B 15/06, B32B 15/08, F16J 15/08, H01M 8/02, H01M 8/04, H01M 8/24

(54) **PRIMER COMPOSITION AND METAL-RUBBER LAMINATE USING SAME**
PRIMERZUSAMMENSETZUNG UND METALL-GUMMI-LAMINAT DAMIT
COMPOSITION PRIMAIRE ET STRATIFIÉ MÉTAL-CAOUTCHOUC L'UTILISANT

(30) Priority: 13.10.2005 JP 2005298395; 13.10.2005 JP 2005298396
(43) Date of publication of application: 14.05.2008
(73) Proprietor: NOK Corporation, Minato-ku Tokyo 105-8585 (JP)
(72) Inventor: SANO, Shinichiro, Kanagawa 251-0042 (JP); ABE, Katsumi, Kanagawa 251-0042 (JP); FUKASAWA, Kiyofumi, Kanagawa 251-0042 (JP)
(74) Representative: Hoffmann Eitle
(86) International application number: PCT/JP2006/319680
(87) International publication number: WO 2007/043377

(56) References cited:
- EP-A1- 1 029 666
- JP-A- 02 063 733
- JP-A- 2004 255 634

## Description

### TECHNICAL FIELD

The present invention relates to a primer composition, to a method for producing a metal/primer/adhesive/rubber laminate and to a metal/primer/adhesive/rubber laminate which is obtainable by said method.

### BACKGROUND ART

Fuel cell gaskets require a water resistance and an acid resistance, so their plate surfaces are plated with gold, etc. Vulcanization bonding of such plated steel sheets and unvulcanized rubber fails to give a stable initial adhesiveness, even if the rubber bonding is carried out with the conventional vulcanization adhesive.

Initial adhesiveness of a chemically less active plated steel sheets can be considerably improved by coating the steel sheets with a primer containing a silane coupling agent as the main component, as a pretreatment for applying a vulcanization adhesive thereto, but there is still such a problem as poor water resistance. Gaskets for electronic memory devices, particularly hard disc drives (HDD), require low out-gassing characteristics and not containing Si, S, Cl, etc. therein, and thus it is not preferable to use such a primer containing a silane coupling agent as the main component.

The water resistance can be improved with a vulcanization bonding primer containing a copolymerization oligomer of an amino group-containing alkoxysilane with a vinyl group-containing alkoxysilane and an organometallic compound, but there is a still further improvement in the acid resistance durability as a problem.
Patent Literature 1 : JP-A-2004-26848
   In the case of simple bonding of plated steel sheets and vulcanized rubber, a thermosetting resin such as phenol resin and epoxy resin can be used as adhesives capable of satisfying the requirements for water resistance and acid resistance, but even these adhesives have a poor adhesiveness to chemically less active plated steel sheets, and in the acid resistance durability tests peeling takes place between the steel sheet and the adhesive layer.
   In connection to these adhesive systems, the present applicants had previously proposed coating with a primer containing either a resol-type phenol resin or a novolak-type phenol resin, or both together, and also an organometallic compound as the main components to improve the acid resistance and the water resistance, but it was found that, for example, dipping in a 0.5% sulfuric acid solution heated to 80°C for 500 hours caused peeling between the primer and the over coated adhesive, therefore there is desired a still further improvement.
Patent Literature 2 : JP-A-2006-206616

### DISCLOSURE OF THE INVENTION

### PROBLEM TO BE SOLVED BY THE INVENTION

An object of the present invention is to provide a primer composition capable of giving distinguished water resistance and acid resistance in vulcanization bonding of a plated steel sheet and unvulcanized rubber, or even in simple bonding of a plated steel sheet and a vulcanized rubber, and also a metal-rubber laminate using the same.

### MEANS FOR SOLVING THE PROBLEM

The object of the present invention can be attained by a primer composition, which comprises 100 parts by weight of polyparavinylphenol and 100 - 200 parts by weight of an organometallic compound. Thus, the present invention can provide a metal-rubber laminate, that is, a metal/primer/adhesive/rubber laminate produced by using the present primer composition.

### EFFECT OF THE INVENTION

The present primer composition, when used as a primer in the production of a metal/primer/adhesive/rubber laminate, can give a metal-rubber laminate having distinguished water resistance and acid resistance in the case of either vulcanization bonding of less active plated steel sheet and unvulcanized rubber or simple bonding of the plated steel sheet and vulcanized rubber, where liquid fluororubber can be preferably used as unvulcanized rubber for forming a rubber layer.

### BEST MODES FOR CARRYING OUT THE INVENTION

Polyparavinylphenol for use as one component for the primer composition, includes commercially available products, for example, Maruka Linker M, a product of Maruzen Petrochemical Co., which can be used directly as such.

An organometallic compound for use as adding component to these polyparavinylphenol includes, for example, organoaluminum compounds such as triisopropoxy aluminum, mono-sec-butoxydipropoxy aluminum, tri-sec-butoxy aluminum, ethylacetoacetate aluminum diisopropylate, aluminum tris(ethylacetoacetate), aluminum monoacetylacetonate bisethylacetoacetate, aluminum tris(acetylacetate), etc.; organotitanium compounds such as titanium lactate, tetraisopropoxytitanium, tetra-n-butoxytitanium, diisopropoxytitanium bis(ethylacetoacetate), 1,3-propanedioxytitanium bis(ethylacetoacetate), diisopropoxytitanium bis(acetylacetonate), titanium tetracetylacetonate, etc.; organozirconium compounds such as tetra-n-propylzirconium, tetra-n-butoxyzirconium, di-n-butoxyzirconium-bis(acetylacetonate), di-n-butoxyzirconium-bis(ethylacetoacetate), and organotin compounds such as dibutyl tin dilaurate, dibutyl tin dioctate, dioctyl tin dilaurate, etc. The organometallic compounds mostly have a limited solvent availability, and thus organoaluminum compounds composed of one or more chelate rings or alkoxy groups, represented by the following formula: 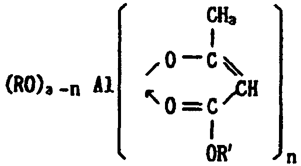 , where R and R' each are a lower alkyl group such as CH₃, C₂H₅, n-C₃H₇, i-C₃H₇, n-C₄H₉, i- C₄H₉, etc., and n is an integer of 0-3, or a titanium acetylacetonate, represented by the following formula: 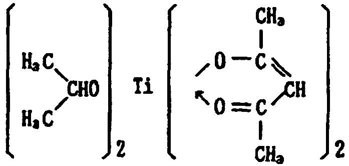 , or a titanium lactate, represented by the following formula:

Ti(OH)₂[OCH(CH₃)COOH]₂

, all of which have a relatively high degree of freedom in the solvent selection, can be preferably used.

The organometallic compound is used in a proportion of parts by weight, on the basis of 100 parts by weight of polyparavinylphenol. When the organometallic compound is used in a proportion of less than 50 parts by weight, particularly the adhesiveness to the plated steel sheet will be lowered, whereas in a proportion above 300 parts by weight, the acid resistance durability will be lowered.

The primer composition comprising the afore-mentioned components as essential components can be used in the form of a solution upon dilution with an organic solvent so that a concentration in total of the afore-mentioned components can be set to 1 to 10wt.%. The organic solvent is not particularly limited, so far as the polyparavinylphenol and the organometallic compound can be stably dissolved therein, and generally includes alcohols such as metanol, ethanol, isopropanol, ketones such as methyl ethyl ketone, methyl isobutyl ketone, etc.; esters such as ethyl acetate, propyl acetate, and ethers such as 2-ethoxyethanol, 2-butoxyethanol.

The primer solution can be applied to a metal, generally a steel sheet such as a stainless steel sheet, an aluminum steel sheet, etc., particularly a plated steel sheet in the present invention, with a film thickness of 0.5 to 30 *µ*m by any coating method such as spraying, dipping, brush coating, roll coater application, followed by drying at room temperature or in a hot air, and by baking treatment at 100° to 250°C for 0.5 to 3 hours. The stainless steel sheet for use herein includes stainless steel sheets of such grades as SUS301, SUS301H, SUS304, SUS430, etc. To enhance the corrosion resistance, it is preferable to use stainless steel sheets, aluminum steel sheets, etc. whose surfaces are plated with gold, nickel, etc.

A vulcanization adhesive selected depending on the species of rubber to be vulcanization bonded can be applied to the surface of the thus formed primer layer. When a liquid fluororubber, as will be given below, is used, a specifically designed adhesives for the liquid fluororubber, for example, SF-12, SF-12-R, etc., products of Shin-Etsu Chemical Co., Ltd., are used in the form of a solution in a fluorinated solvent such as m-bis(trifluoromethyl) benzene [hexafluoro-m-xylene], etc. The vulcanization adhesive can be applied to the surface of the primer-treated steel sheet by any coating method such as spraying, dipping, brush coating, roll coater application, etc., followed by drying and by baking treatment under appropriate drying conditions and baking conditions, respectively.

The primer can be used not only in the vulcanization bonding of a steel sheet and unvulcanized rubber, but also to simple bonding of a steel sheet and vulcanized rubber. Any adhesive can be used for the bonding to the vulcanized rubber, but when the water resistance and the acid resistance are required for the resulting laminates, it is preferable to use a thermosetting resin such as epoxy resin or phenol resin.

A rubber layer is then formed on the surface of the thus formed adhesive layer, using an unvulcanized rubber compound comprising fluororubber, NBR, hydrogenated NBR, acrylic rubber, EPDM, chloroprene rubber, together with a vulcanizing agent, a reinforcing agent, and other necessary compounding ingredients, preferably an unvulcanized fluororubber compound or EPDM compound from the viewpoint of the water resistance and the acid resistance. A compound of liquid fluororubber, which is a linear fluoropolymer compound having the main chain represented by the following general formula in the molecule:

[CF₂CF(CF₃)O]ₙ

and having hydrolyzable silyl groups at both terminals of the molecular chain, and having a room temperature viscosity of not more than 10⁵ poises, preferably not more than 10⁴ poises (B-type viscometer) can be also used for the unvulcanized fluororubber compound. The liquid fluororubber makes up a room temperature-curable type, liquid fluororubber compound together with an organosilicon compound having at least two silanol groups in the molecule and a condensation promoter. Such a liquid rubber includes commercially available products, for example, SIFEL series of products of Shin-Etsu Chemical Co., Ltd. (two-liquid type 3400A/B, 3511A/B, 3702A/B, etc. capable of giving vulcanized fluororubbers having different hardnesses, depending on use and required characteristics), which can be used directly as such.
Patent Literature 3 : JP-A-9-77944
Patent Literature 4 : US Patent No. 5,837,774

For fuel cell gaskets, it is necessary to use rubber materials having a relatively low hardness, depending on the strength of separators, etc. to be used together. Generally, the fluororubber has a high hardness, so it is preferable to use a liquid fluororubber having a low hardness. Due to the recent requirements for stack size reduction, the fuel cell gaskets are designed in a shape of very small thickness and so LIM molding is very effective for liquid rubber in the case of molding of such a small thickness (whereas SIM molding is not advantageous in respect to the molding pressure and flowability). Generally, the liquid rubber has a short time for mold-curing as an advantage. In view of these advantages, liquid fluororubber is used as a suitable molding material particularly for fuel cell gaskets.

A rubber layer can be formed by baking the vulcanization adhesive on the surface of the primer layer formed on the metal sheet, and then placing an unvulcanized rubber compound on the surface of the baked vulcanization adhesive, followed by heating under pressure at about 130° to about 210°C for about 1 to about 60 minutes, or by applying a simple adhesive to the surface of the primer layer formed on the metal sheet, and bonding vulcanized rubber thereto, followed by heating under pressure generally at about 100° to about 210°C, though depending on the species of vulcanized rubber.

### EXAMPLES

The present invention will be described below, referring to Examples.

### EXAMPLE 1

To the surface of a defatted, gold-plated stainless steel sheet a primer having the following composition was applied to a thickness of 1.5 *µ*m, followed by drying at room temperature and baking at 220 °C for 30 minutes:

| | Parts by weight |
|---|---|
| Polyparavinylphenol (Maruka Linker M, a product of Maruzen Petrochemical Co., Ltd.) | 36 |
| Aluminum alkylacetoacetate diisopropylate | 63 |
| 2-Ethoxyethanol | 901 |

To the surface of the primer a commercially available phenol/epoxy resin-based vulcanization adhesive for fluororubber was applied to a thickness of 10 µ m, followed by drying at room temperature and baking at 200°C for 15 minutes:

| | Parts by weight |
|---|---|
| Sixon 300, a product of Rhom and Haas Co. | 64 |
| Sixon 311, a product of Rhom and Haas Co. | 64 |
| Methyl ethyl ketone | 872 |

Onto the surface of the vulcanization adhesive an unvulcanized fluororubber compound having the following composition was further placed, followed by press vulcanization at 180°C for 6 minutes and then secondary vulcanization at 200°C for 24 hours to prepare bonding test pieces:

| | Parts by weight |
|---|---|
| Fluororubber (Viton E45, a product of DuPont) | 100 |
| MT carbon black | 20 |
| Magnesium oxide (Magnesia #150, a product of Kyowa Chemical Co., Ltd.) | 6 |
| Calcium hydroxide | 3 |
| Vulcanizing agent (Curative #30, a product of DuPont) | 2 |
| Vulcanization promoter (Curative #20, a product of DuPont) | 1 |

Vulcanized rubber region on the bonding test piece was formed in a belt shape on the gold-plated stainless steel sheet and had a 1mm-high projection of semi-circular cross-section formed at the center of the belt having a thickness of 0.2mm and a total width of 2mm.

The bonding test pieces were subjected to determination of percent residual rubber area, according to 90° Peeling Test Procedure (JIS K6256), and visual inspection of peeling states at the interfaces, at the initial stage and after dipping in hot water at 90°C (measured not only in a non-compressed state, but also in a 50% compression-set state in the thickness direction of the product rubber region), or in 0.5% sulfuric acid at 90°C, each for 250 hours, 500 hours, and 1,000 hours. Evaluation of the peeling states at the interfaces was made and given by R for rubber rupture, RC for peeling at the interface between the rubber and the adhesive, CP for peeling at the interface between the adhesive and the primer, and M for peeling at the interface between the metal and the primer.

### EXAMPLE 2

In Example 1, the same amount of titanium lactate was used in place of aluminum alkylacetoacetate diisopropylate of the primer ingredient.

### COMPARATIVE EXAMPLE 1

In Example 1, a primer having the following composition was used in place of the primer used in Example 1:

| | Parts by weight |
|---|---|
| Resol-type phenol resin (Resitop PL-2208, a product of Gun-ei Chemical Co., Ltd.; solid matter concentration: 63wt.%) | 40 |
| Ethylacetoacetate aluminum diisopropylate | 25 |
| 2-Ethoxyethanol | 935 |

### COMPARATIVE EXAMPLE 2

In Example 1, a silane coupling agent-based surface treatment agent (AP-133, a product of Rhode Far East Co.) was used as the primer, and the baking treatment was carried out at 200°C for 15 minutes.

### COMPARATIVE EXAMPLE 3

In Example 1, a primer for vulcanization bonding, which comprised alkoxysilane copolymerization oligomer, titanium tetra(acetylacetonate), methanol, and water, as disclosed in Example 1 of the afore-mentioned Patent Literature 1, was used as the primer, and the baking treatment was carried out at 200°C for 15 minutes.

Results of determination and evaluation obtained in the foregoing Examples 1 and 2, and Comparative Examples 1 to 3 are shown in the following Table 1.

**Table 1**

| | | Example No. | | Comp. Ex. No. | | |
|---|---|---|---|---|---|---|
| Condition for determination | | 1 | 2 | 1 | 2 | 3 |
| Initial stage | | | | | | |
| Percent residual rubber area | (%) | 100 | 100 | 100 | 100 | 100 |
| Peeling at the interface | | R | R | R | R | R |
| After dipping in hot water at 90°C for 250 hours | | | | | | |
| (without compression) | | | | | | |
| Percent residual rubber area | (%) | 100 | 100 | 100 | 20 | 100 |
| Peeling at the interface | | R | R | R | M | R |
| (50% compression) | | | | | | |
| Percent residual rubber area | (%) | 100 | 100 | 100 | 10 | 100 |
| Peeling at the interface | | R | R | R | M | R |
| After dipping in hot water at 90°C for 500 hours | | | | | | |
| (without compression) | | | | | | |
| Percent residual rubber area | (%) | 100 | 100 | 80 | 0 | 100 |
| Peeling at the interface | | R | R | CP | M | R |
| (50% compression) | | | | | | |
| Percent residual rubber area | (%) | 90 | 100 | 70 | 0 | 100 |
| Peeling at the interface | | CP | R | CP | M | R |
| After dipping in hot water at 90°C for 1,000 hours | | | | | | |
| (without compression) | | | | | | |
| Percent residual rubber area | (%) | 80 | 100 | 50 | - | 100 |
| Peeling at the interface | | CP | R | CP | - | R |
| (50% compression) | | | | | | |
| Percent residual rubber area | (%) | 80 | 90 | 40 | - | 90 |
| Peeling at the interface | | CP | CP | CP | - | R |
| After dipping in sulfuric acid at 90°C for 250 hours | | | | | | |
| Percent residual rubber area | (%) | 100 | 100 | 100 | 0 | 20 |
| Peeling at the interface | | R | R | R | M | M |
| After dipping in sulfuric acid at 90°C for 500 hours | | | | | | |
| Percent residual rubber area | (%) | 90 | 100 | | - | 0 |
| Peeling at the interface | | M | R | CP | - | M |
| After dipping in sulfuric acid at 90°C for 1,000 hours | | | | | | |
| Percent residual rubber area | (%) | 80 | 90 | 30 | - | - |
| Peeling at the interface | | CP | CP | CP | - | - |

### EXAMPLES 3 AND 4, AND COMPARATIVE EXAMPLES 4 TO 6

In Examples 1 and 2, and Comparative Examples 1 to 3, the following adhesive was used in the place of the vulcanization adhesive :

| | Parts by weight |
|---|---|
| Epoxy resin (EP-4100, a product of Asahi Denka Kogyo K.K.) | 926 |
| Dicyandiamide (EH-3636AS, a product of Asahi Denka Kogyo K.K.) | 8 |

Bonding with the adhesive was carried out by applying the adhesive to a primer-coated, gold-plated stainless steel sheet to a thickness of 10 *µ*m, placing thereon a vulcanized rubber (1.5mm-thick sheet obtained by press vulcanizing the unvulcanized fluororubber compound used in Example 1 at 180°C for 6 minutes, followed by secondary vulcanization at 200°C for 24 hours), and curing the adhesive under pressure at 150°C for one hour.

Results of determination and evaluation obtained in the foregoing Examples 3 and 4, and Comparative Examples 4 to 6 are shown in the following Table 2.

**Table 2**

| | | Example No. | | Comp. Ex. No. | | |
|---|---|---|---|---|---|---|
| Condition for determination | | 3 | 4 | 4 | 5 | 6 |
| Initial stage | | | | | | |
| Percent residual rubber area | (%) | 100 | 100 | 100 | 100 | 100 |
| Peeling at the interface | | R | R | R | R | R |
| After dipping in hot water at 90°C for 250 hours | | | | | | |
| (without compression) | | | | | | |
| Percent residual rubber area | (%) | 100 | 100 | 100 | 20 | 100 |
| Peeling at the interface | | R | R | R | M | R |
| (50% compression) | | | | | | |
| Percent residual rubber area | (%) | 100 | 100 | 100 | 0 | 100 |
| Peeling at the interface | | R | R | R | M | R |
| After dipping in hot water at 90°C for 500 hours | | | | | | |
| (without compression) | | | | | | |
| Percent residual rubber area | (%) | 100 | 100 | 100 | 0 | 100 |
| Peeling at the interface | | R | R | R | M | R |
| (50% compression) | | | | | | |
| Percent residual rubber area | (%) | 80 | 100 | 70 | - | 90 |
| Peeling at the interface | | CP | R | RC | - | R |
| After dipping in hot water at 90°C for 1,000 hours | | | | | | |
| (without compression) | | | | | | |
| Percent residual rubber area | (%) | 100 | 100 | 100 | - | 100 |
| Peeling at the interface | | R | R | R | - | R |
| (50% compression) | | | | | | |
| Percent residual rubber area | (%) | 80 | 90 | 30 | - | 80 |
| Peeling at the interface | | CP | R | R | - | R |
| After dipping in sulfuric acid at 90°C for 250 hours | | | | | | |
| Percent residual rubber area | (%) | 100 | 100 | 100 | 0 | 0 |
| Peeling at the interface | | R | R | R | M | M |
| After dipping in sulfuric acid at 90°C for 500 hours | | | | | | |
| Percent residual rubber area | (%) | 100 | 100 | 70 | - | - |
| Peeling at the interface | | M | R | CP | - | - |
| After dipping in sulfuric acid at 90°C for 1,000 hours | | | | | | |
| Percent residual rubber area | (%) | 80 | 100 | 30 | - | - |
| Peeling at the interface | | CP | CP | CP | - | - |

### EXAMPLES 5 AND 6, AND COMPARATIVE EXAMPLES 7 TO 9

In Examples 1 and 2, and Comparative Examples 1 to 3, the a vulcanization adhesive having the following composition was used:

| | Parts by weight |
|---|---|
| Adhesive for liquid fluororubber (SF-12, a product of Shin-Etsu Chemical Co., Ltd.) | 100 |
| Hexafluoro-m-xylene | 100 |

The adhesive was applied to a primer-coated, gold-plated stainless steel sheet to a thickness of 2 *µ*m, dried at room temperature, and baked at 120°C for 10 minutes to form a primer- and vulcanization adhesive-coated, gold-plated stainless steel sheet. A liquid fluororubber (SIFEL 3511AB, a product of Shin-Etsu Chemical Co., Ltd.) was injection molded onto the stainless steel sheet by a liquid rubber injection molding machine, and then subjected to secondary vulcanization at 200°C for 4 hours to obtain an adhesion test pieces for gasket (stainless steel/primer/adhesive/fluororubber laminates).

Results of determination and evaluation obtained in the foregoing Examples 5 and 6, and Comparative Examples 7 to 9 are shown in the following Table 3. Hot water test was carried out only under the 50% compression-set conditions.

**Table 3**

| | | Example No. | | Comp. Ex. No. | | |
|---|---|---|---|---|---|---|
| Conditions for determination | | 5 | 6 | 7 | 8 | 9 |
| Initial stage | | | | | | |
| Percent residual rubber area | (%) | 100 | 100 | 100 | 100 | 100 |
| Peeling at the interface | | R | R | R | R | R |
| After dipping in hot water at 90°C for 250 hours | | | | | | |
| (50% compression) | | | | | | |
| Percent residual rubber area | (%) | 100 | 100 | 100 | 30 | 100 |
| Peeling at the interface | | R | R | R | M | R |
| After dipping in hot water at 90°C for 500 hours | | | | | | |
| (50% compression) | | | | | | |
| Percent residual rubber area | (%) | 90 | 100 | 70 | 0 | 100 |
| Peeling at the interface | | CP | R | CP | M | R |
| After dipping in hot water at 90°C for 1,000 hours | | | | | | |
| (50% compression) | | | | | | |
| Percent residual rubber area | (%) | 90 | 100 | 60 | - | 90 |
| Peeling at the interface | | CP | R | CP | - | R |
| After dipping in sulfuric acid at 90°C for 250 hours | | | | | | |
| Percent residual rubber area | (%) | 100 | 100 | 100 | 0 | 60 |
| Peeling at the interface | | R | R | R | M | M |
| After dipping in sulfuric acid at 90°C for 500 hours | | | | | | |
| Percent residual rubber area | (%) | 90 | 100 | 60 | - | 20 |
| Peeling at the interface | | M | R | CP | - | M |
| After dipping in sulfuric acid at 90°C for 1,000 hours | | | | | | |
| Percent residual rubber area | (%) | 90 | 100 | 30 | - | 0 |
| Peeling at the interface | | CP | R | CP | - | M |

### INDUSTRIAL UTILITY

The present primer composition can be effectively used in the production of rubber-metal integrated type gaskets, particularly fuel cell gaskets or HDD cover gaskets (metallic separator-integrated type gaskets).

## Claims

1. A primer composition, which comprises 100 parts by weight of polyparavinylphenol and 100-200 parts by weight of an organometallic compound.

2. A primer composition according to Claim 1, wherein the organometallic compound is a compound having at least one chelate ring and/or alkoxyl group.

3. A primer composition according to Claim 2, wherein the organometallic compound is an organoaluminum compound.

4. A primer composition according to Claim 3, wherein the organoaluminum compound is a compound, represented by the following formula: 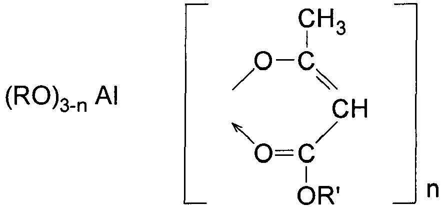 where R and R' each are a lower alkyl group having 1-4 carbon atoms, and n is an integer of 0-3.

5. A primer composition according to Claim 2, wherein the organometallic compound is an organotitanium compound.

6. A primer composition according to Claim 5, wherein the organotitanium compound is titanium acetylacetonate, represented by the following formula:

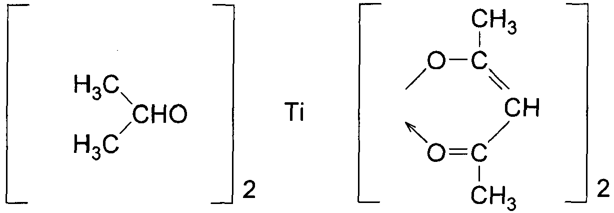

7. A primer composition according to Claim 5, wherein the organotitanium compound is titanium lactate, represented by the formula:
Ti(OH)₂[OCH(CH₃)COOH]₂

8. A method for producing a metal/primer/adhesive/rubber laminate, wherein a primer composition according to any one of Claims 1 to 7 is used.

9. A method for producing a metal/primer/adhesive/rubber laminate according to Claim 8, wherein the primer composition is used in the form of a solution in an organic solvent having a concentration in total of the primer components of 1 to 10 wt.%, wherein the primer solution is applied to a metal with a film thickness of 0.5 to 30 µm, followed by drying at room temperature or in a hot air, and by baking treatment at 100° to 250°C for 0.5 to 3 hours.

10. A method for producing a metal/primer/adhesive/rubber laminate according to Claim 9, wherein
further a vulcanization adhesive is applied to the surface of the formed primer layer by a coating method, followed by drying and by baking treatment under appropriate drying conditions and baking conditions, respectively.

11. A method for producing a metal/primer/adhesive/rubber laminate according to Claim 10, wherein further a rubber layer is formed on the surface of the formed adhesive layer using an unvulcanized rubber compound comprising a
compound selected from the list consisting of fluororubber, NBR, hydrogenated NBR, acrylic rubber, EPDM and chloroprene rubber,
together with a vulcanizing agent, a reinforcing agent, and other necessary compounding ingredients.

12. A method for producing a metal/primer/adhesive/rubber laminate according to Claim 11, wherein the unvulcanized fluororubber is unvulcanized liquid fluororubber.

13. A metal/primer/adhesive/rubber laminate obtainable by a production method according to any one of Claims 8 to 12.

14. A metal/primer/adhesive/rubber laminate according to Claim 13, wherein the metal is a steel sheet which may be optionally a plated steel sheet.

15. Use of a primer composition according to any one of Claims 1 to 7 as a primer in the bonding of a steel sheet and a vulcanized rubber.

16. Use of a metal/primer/adhesive/rubber laminate according to Claim 13 or 14 as a rubber-metal integrated type gasket.

17. The use of a metal/primer/adhesive/rubber laminate according to Claim 16, wherein the rubber-metal integrated type gasket is a fuel cell gasket or a HDD cover gasket.

## Patentansprüche

1. Grundierungszusammensetzung, die 100 Gew.-Teile Polyparavinylphenol und 100 bis 200 Gew.-Teile einer organometallischen Verbindung umfasst.

2. Grundierungszusammensetzung gemäß Anspruch 1, worin die organometallische Verbindung eine Verbindung mit mindestens einem Chelatring und/oder einer Alkoxygruppe ist.

3. Grundierungszusammensetzung gemäß Anspruch 2, worin die organometallische Verbindung eine Organoaluminiumverbindung ist.

4. Grundierungszusammensetzung gemäß Anspruch 3, worin die Organoaluminiumverbindung eine Verbindung ist, die durch die folgende Formel dargestellt wird: 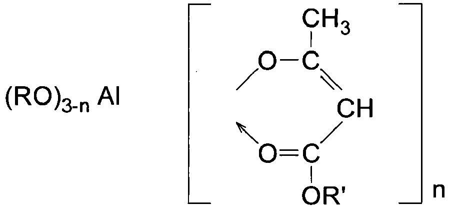 worin R und R' jeweils eine Niederalkylgruppe mit 1 bis 4 Kohlenstoffatomen sind und n eine ganze Zahl von 0 bis 3 ist.

5. Grundierungszusammensetzung gemäß Anspruch 2, worin die organometallische Verbindung eine Organotitanverbindung ist.

6. Grundierungszusammensetzung gemäß Anspruch 5, worin die Organotitanverbindung Titanacetylacetonat ist, dargestellt durch die folgende Formel:

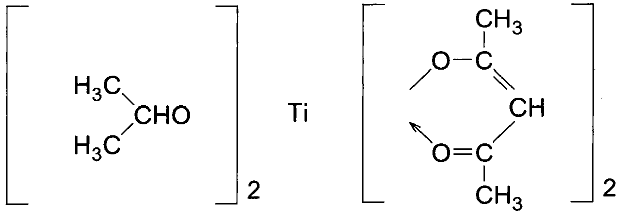

7. Grundierungszusammensetzung gemäß Anspruch 5, worin die Organotitanverbindung Titanlactat ist, dargestellt durch die Formel:
Ti(OH)₂[OCH(CH₃)COOH]₂.

8. Verfahren zur Herstellung eines
Metall/Grundierung/Adhäsiv/Kautschuk bzw. Gummi-Laminats, worin eine Grundierungszusammensetzung gemäß irgendeinem der Ansprüche 1 bis 7 verwendet wird.

9. Verfahren zur Herstellung eines
Metall/Grundierung/Adhäsiv/Kautschuk bzw. Gummi-Laminats gemäß Anspruch 8, worin die Grundierungszusammensetzung in der Form einer Lösung in einem organischen Lösungsmittel mit einer Gesamtkonzentration der Grundierungskomponenten von 1 bis 10 Gew.% verwendet wird, worin die Grundierungslösung auf ein Metall in einer Filmdicke von 0,5 bis 30 µm aufgetragen wird, gefolgt von Trocknen bei Raumtemperatur oder in Heißluft und einer Backbehandlung bei 100 bis 250°C für 0,5 bis 3 Stunden.

10. Verfahren zur Herstellung eines
Metall/Grundierung/Adhäsiv/Kautschuk bzw. Gummi-Laminats gemäß Anspruch 9, worin
ferner ein Vulkanisationsadhäsiv auf die Oberfläche der gebildeten Grundierungsschicht durch ein Beschichtungsverfahren aufgetragen wird, gefolgt von Trocknen und einer Backbehandlung unter geeigneten Trocknungsbedingungen bzw. Backbedingungen.

11. Verfahren zur Herstellung eines
Metall/Grundierung/Adhäsiv/Kautschuk bzw. Gummi-Laminats gemäß Anspruch 10, worin ferner eine Gummischicht auf der Oberfläche der gebildeten Adhäsivschicht unter Verwendung einer unvulkanisierten Kautschukkomponente gebildet wird, umfassend eine Verbindung, die ausgewählt aus der Liste, bestehend aus Fluorkautschuk, NBR, hydriertem NBR, Acrylkautschuk, EPDM und Chloroprenkautschuk,
zusammen mit einem Vulkanisationsmittel, einem Verstärkungsmittel und anderen notwendigen Mischungsinhaltsstoffen.

12. Verfahren zur Herstellung eines
Metall/Grundierung/Adhäsiv/Kautschuk bzw. Gummi-Laminats gemäß Anspruch 11, worin der unvulkanisierte Fluorkautschuk unvulkanisierter flüssiger Fluorkautschuk ist.

13. Metall/Grundierung/Adhäsiv/Kautschuk bzw. Gummi-Laminat, erhältlich durch das Herstellungsverfahren gemäß irgendeinem der Ansprüche 8 bis 12.

14. Metall/Grundierung/Adhäsiv/Kautschuk bzw. Gummi-Laminat gemäß Anspruch 13, worin das Metall ein Stahlblech ist, das optional ein plattiertes Stahlblech sein kann.

15. Verwendung der Grundierungszusammensetzung gemäß irgendeinem der Ansprüche 1 bis 7 als Grundierung beim Verbinden eines Stahlblechs und eines vulkanisierten Kautschuks.

16. Verwendung eines Metall/Grundierung/Adhäsiv/Kautschuk bzw. Gummi-Laminats gemäß Anspruch 13 oder 14 als Dichtung vom integrierten Kautschuk-Metall-Typ.

17. Verwendung eines Metall/Grundierung/Adhäsiv/Kautschuk bzw. Gummi-Laminats gemäß Anspruch 16, worin die Dichtung vom integrierten Kautschuk- bzw. Gummi-Metall-Typ eine Brennstoffzellendichtung oder eine Festplattengehäusedichtung ist.

## Revendications

1. Composition d'apprêt, qui comprend 100 parties en poids de polyparavinylphénol et 100 à 200 parties en poids d'un composé organométallique.

2. Composition d'apprêt selon la revendication 1, dans laquelle le composé organométallique est un composé contenant au moins un cycle de chélate et/ou un groupe alcoxyle.

3. Composition d'apprêt selon la revendication 2, dans laquelle le composé organométallique est un composé d'organoaluminium.

4. Composition d'apprêt selon la revendication 3, dans laquelle le composé d'organoaluminium est un composé représenté par la formule suivante : 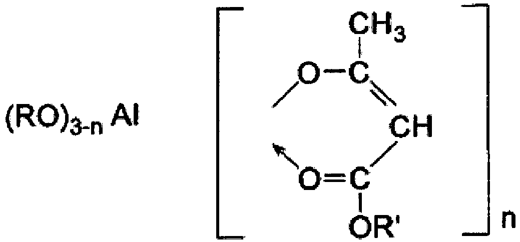 où R et R' sont chacun un groupe alkyle inférieur contenant 1 à 4 atomes de carbone et n est un nombre entier de 0 à 3.

5. Composition d'apprêt selon la revendication 2, dans laquelle le composé organométallique est un composé d'organotitane.

6. Composition d'apprêt selon la revendication 5, dans laquelle le composé d'organotitane est l'acétyl-acétonate de titane représenté par la formule suivante :

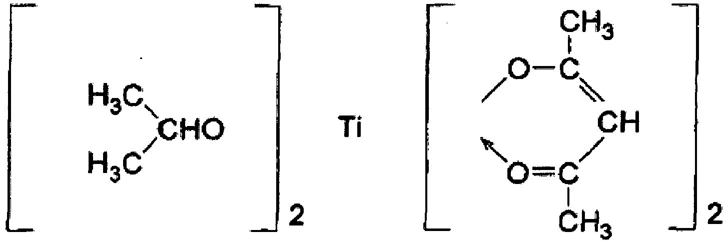

7. Composition d'apprêt selon la revendication 5, dans laquelle le composé d'organotitane est le lactate de titane représenté par la formule :
Tï(OH)₂[OCH(CH₃)COOH]₂

8. Procédé de production d'un stratifié métal/apprêt/adhésif/caoutchouc, dans lequel une composition d'apprêt selon l'une quelconque des revendications 1 à 7 est utilisée.

9. Procédé de production d'un stratifié métal/apprêt /adhésif/caoutchouc selon la revendication 8, dans lequel la composition d'apprêt est utilisée sous la forme d'une solution dans un solvant organique présentant une concentration totale en composants d'apprêt de 1 % à 10 % en poids, dans lequel la solution d'apprêt est appliquée sur un métal sur une épaisseur de film de 0,5 *µ*m à 30 *µ*m, le tout suivi d'un séchage à température ambiante ou à l'air chaud et d'un traitement de cuisson à une température de 100 °C à 250 °C pendant 0,5 à 3 heures.

10. Procédé de production d'un stratifié métal/apprêt/adhésif/caoutchouc selon la revendication 9, dans lequel en outre un adhésif de vulcanisation est appliqué sur la surface de la couche d'apprêt formée par un procédé de revêtement, le tout suivi d'un séchage et d'un traitement par cuisson dans des conditions de séchage et des conditions de cuisson appropriées, respectivement.

11. Procédé de production d'un stratifié métal/apprêt /adhésif/caoutchouc selon la revendication 10, dans lequel, en outre une couche de caoutchouc est formée sur la surface de la couche adhésive formée en utilisant un composé de caoutchouc non vulcanisé comprenant un composé choisi dans la liste constituée d'un caoutchouc fluoré, d'un NBR, d'un NBR hydrogéné, d'un caoutchouc acrylique, d'un EPDM et d'un caoutchouc de chloroprène,
conjointement avec un agent de vulcanisation, un agent de renforcement et d'autres ingrédients de compoundage nécessaires.

12. Procédé de production d'un stratifié métal/apprêt /adhésif/caoutchouc selon la revendication 11, dans lequel le caoutchouc fluoré non vulcanisé est un caoutchouc fluoré liquide non vulcanisé.

13. Stratifié métal/apprêt/adhésif/caoutchouc pouvant être obtenu par un procédé de production selon l'une quelconque des revendications 8 à 12.

14. Stratifié métal/apprêt /adhésif/caoutchouc selon la revendication 13, dans lequel le métal est une tôle d'acier qui peut être facultativement une tôle d'acier plaquée.

15. Utilisation d'une composition d'apprêt selon l'une quelconque des revendications 1 à 7 comme apprêt dans la liaison d'une tôle d'acier et d'un caoutchouc vulcanisé.

16. Utilisation d'un stratifié métal/apprêt/adhésif/ caoutchouc selon la revendication 13 ou 14 comme joint d'étanchéité de type caoutchouc/métal intégré.

17. Utilisation d'un stratifié métal/apprêt /adhésif/caoutchouc selon la revendication 16, dans laquelle le joint d'étanchéité de type caoutchouc/métal intégré est un joint d'étanchéité de pile à combustible ou un joint d'étanchéité de couvercle de HDD.
